# EUROPEAN PATENT APPLICATION

(11) **EP 2 540 375 A1**
(43) Date of publication of application: **02.01.2013**
(21) Application number: 11747504.6
(22) Date of filing: 25.02.2011
(51) Int. Cl.: B01D 53/04

(54) **DEVICE FOR GAS SEPARATION BY PRESSURE SWING ADSORPTION**

(30) Priority: 27.02.2010 JP 2010043610
(71) Applicant: JFE Steel Corporation, Tokyo 100-0011 (JP); Sumitomo Seika Chemicals Co. Ltd., Kako-gun, Hyogo 675-0145 (JP)
(72) Inventor: SAIMA, Hitoshi, Tokyo 100-0011 (JP); MOGI, Yasuhiro, Tokyo 100-0011 (JP); HARAOKA, Takashi, Tokyo 100-0011 (JP); MIYAKE, Masanori, Kako-gun Hyogo 675-0145 (JP); TAKATA, Yoshinori, Kako-gun Hyogo 675-0145 (JP)
(74) Representative: Stebbing, Timothy Charles
(86) International application number: PCT/JP2011/054268
(87) International publication number: WO 2011/105548

(57) **Abstract**

A gas separation device of the present invention has plural gas adsorption regions A juxtaposed at an interval, and a gas inflow region B and a gas outflow region C are provided relative to the gas adsorption regions A so as to satisfy conditions (i) a region between the adjacent gas adsorption regions A constitutes the gas inflow region B or the gas outflow region C, which is adjacent to both of the gas adsorption regions A, and (ii) the gas inflow region B is present at one side in a juxtapose direction of the gas adsorption regions A and the gas outflow region C is present at the other side so as to be adjacent to the respective gas adsorption regions A.

## Description

### Field

The present invention relates to a gas separation device for adsorbing and separating a specific gas component from a mixed gas using a pressure swing adsorption method.

### Background

As a separation method of a mixed gas, a pressure swing adsorption method (PSA method) has been used from the past. The pressure swing adsorption method adsorbs a gas component to an adsorbent by bringing a mixed gas into contact with the adsorbent having high adsorptive force with respect to one gas component or more in the mixed gas, concentrates other gas components, and detaches the adsorbed gas component from the adsorbent by lowering the in-tank pressure in order for separation. The pressure swing adsorption method is used in various fields as a method of separating mixed gasses. In many cases, the pressure swing adsorption method is normally used as a method of manufacturing a high-purity gas by separating a specific gas component from a mixed gas. As high-purity gasses adsorbed and separated (manufactured) from a mixed gas by the pressure swing adsorption method, there are, for example, hydrogen, oxygen, a carbon dioxide gas, carbon monoxide or the like.

A method has been known which adsorbs nitrogen to an absorbent using the pressure swing adsorption method and using air as a raw material to manufacture a high-purity oxygen. In this method, although an X type zeolite subjected to ion-exchange by calcium has been used as the adsorbent, in recent years, an X type zeolite subjected to ion-exchange by lithium having high adsorptivity to nitrogen has been used. In order to produce hydrogen from a mixed gas containing hydrogen of about 50 to 80 vol%, for example, hydrocarbon and alcohols in a petrochemical industry, a resolution gas of ethers or a reforming gas, a coke-oven gas in an iron manufacturing business or the like, the pressure swing adsorption method using an A type zeolite as an adsorbent is performed. In the production of oxygen and hydrogen using such a pressure swing adsorption method, a high-concentration and high-purity necessary gas component is produced by adsorbing an unnecessary gas component to the adsorbent.

Meanwhile, a carbon dioxide gas for chemical raw materials and dry ice is produced by the pressure swing adsorption using a boiler effluent gas and a combustion effluent gas as raw materials. In the production of carbon dioxide gas, an active carbon-based adsorbent and a Y type zeolite-based adsorbent are used. Carbon monoxide for chemical raw materials is produced by the pressure swing adsorption method using a converter gas of the steel industry as a raw material. In the production of carbon monoxide, a zeloite-based adsorbent and a copper (I)/aluminum-based adsorbent are used. In the production of the carbon dioxide gas and carbon monoxide using the pressure swing adsorption method, by adsorbing the necessary gas component to the adsorbent and detaching the same, the high-purity necessary gas component is produced.

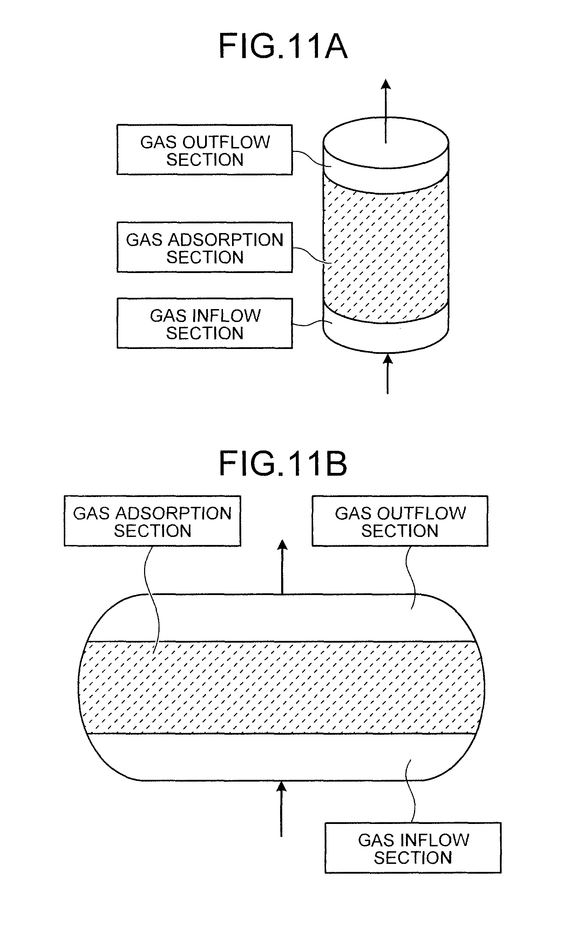

As mentioned above, depending on the kind of gas and the characteristics of the adsorbent, gas separation systems using various pressure swing adsorption methods have been developed and operated. However, regarding gas separation devices (pressure swing adsorption devices) serving as the most important portion, there is no big structural difference. The structures of conventional gas separation devices are roughly classified into a cylinder type and a pillow type. As illustrated in Fig. 11A, a gas separation device having a cylindrical tower structure has a structure which introduces a source gas (mixed gas) from the bottom and adsorbs a gas component to an adsorbent filled in a gas adsorption section. When increasing the size thereof, the floor height of the gas adsorption section is increased, and the pressure loss when causing gas to pass is increased. For this reason, in a large device of a low pressure in which the pressure loss becomes the problem, a pillow shape illustrated in Fig. 11B is adopted. Since the pillow-shaped device can cope with an increase in size by lengthening the length of the pillow, the floor height of the gas adsorption section can be suppressed to a low level, and it is possible to perform the operation with the pressure loss remaining low. However, in the case of the pillow type, the filling rate (volume ratio) of the adsorbent to the capacity cannot be increased because of the need for suppressing the pressure loss to a low level. For this reason, there is a defect that, in comparison with the rate that the device becomes large, the gas throughput does not increase much.

Various suggestions have been conventionally made to solve the problems. For example, Patent Literature 1 suggests that an adsorbent is filled in a circular ring shape in a cylindrical-shaped gas separation device. In this device, a large area of a gas dispersion board is secured by forming the adsorbent filling structure in the circular ring shape in order to suppress the pressure loss, and furthermore, a cross-sectional area in a gas advancing direction is reduced as the gas volume is reduced by the adsorption of the gas in order to suppress a decline in gas linear speed.

### Citation List

### Patent Literature

Patent Literature 1: Japanese Laid-open Patent Publication 1-164417

### Summary

### Technical Problem

However, because the device of the Patent Literature 1 has the structure that constitutes a partition forming the circular ring by a dispersion board, when implementing, problems as described below occur. That is, because the adsorbent is typically a granulation of a particle size of about 2 to 3 mm, the dispersion board needs to have a structure in which a plurality of gas through-holes (openings) of about 1 mm is formed. However, in the case of this device, it is very difficult to secure accuracy of the circular ring while maintaining the strength of the dispersion board by reinforcement. In addition, it is considerably difficult to arrange the center of two ring-shaped dispersion boards in the overall height of the large gas separation device in the height direction. Furthermore, even if those operations can be realized, the cost of the device is considerably increased.

As described above, in the related art, there has not been provided a gas separation device capable of concurrently satisfying the demand that (i) the adsorbent filling rate (the volume ratio) to the volume be high even if the size is increased, and (ii) an inexpensive and simple structure. An object of the present invention is to solve the problems mentioned above and provide a gas separation device using the pressure swing adsorption method capable of increasing the adsorbent filing rate to the capacity and obtaining the simple and inexpensive structure even if the size of the device is increased. Solution to Problem

In order to solve the problems described above, an aspect of the present invention provides a gas separation device using a pressure swing adsorption method which brings a mixed gas serving as a raw material into contact with an adsorbent filled in a gas adsorption region (A), and adsorbs and separates one or more gas components in the mixed gas, wherein the device has a plurality of the gas adsorption regions (A) juxtaposed at an interval, and a gas inflow region (B) and a gas outflow region (C) are provided relative to the gas adsorption regions (A) so as to satisfy conditions (i) and (ii) below,
(i) a region between the adjacent gas adsorption regions (A) constitutes the gas inflow region (B) or the gas outflow region (C), which is adjacent to both of the gas adsorption regions (A), and
(ii) the gas inflow region (B) is present at one side in a juxtapose direction of the gas adsorption regions (A) and the gas outflow region (C) is present at the other side so as to be adjacent to the respective gas adsorption regions (A).

The above conditions (i) and (ii) are satisfied with a gas separation device using a pressure swing adsorption method, wherein the interior of the gas separation device is partitioned into 2n+1 (n is a natural number equal to or greater than 2) regions by straight lines parallel to a diameter, whereby the gas adsorption regions (A), the gas inflow region (B) and the gas outflow region (C) are provided such that 2m-th (m is a natural number) regions from an end are the gas adsorption regions (A), a 4p+1-th (p is a natural number) region from the same end is the gas inflow region (B), and a 4p-1-th (p is a natural number) region from the same end is the gas outflow region (C)

The above conditions (i) and (ii) are satisfied with a gas separation device using a pressure swing adsorption method, wherein the interior of the gas separation device is partitioned into 2n+1 (n is a natural number equal to or greater than 2) regions by straight lines parallel to a diameter, whereby the gas adsorption regions (A), the gas inflow region (B) and the gas outflow region (C) are provided such that 2m-th (m is a natural number) regions from an end are the gas adsorption regions (A), a 4p+1-th (p is a natural number) region from the same end is the gas outflow region (C), and a 4p-1-th (p is a natural number) region from the same end is the gas inflow region (B).

The above conditions (i) and (ii) are satisfied with a gas separation device using a pressure swing adsorption method, wherein the interior of the gas separation device is partitioned into 2n+1 (n is a natural number equal to or greater than 2) regions in a height direction, whereby the gas adsorption regions (A), the gas adsorption region (B), and the gas inflow region (C) are provided such that 2m-th (m is a natural number) regions from an upper end are the gas adsorption regions (A), a 4p+1-th (p is a natural number) region from the upper end is the gas outflow region (C), and a 4p-1-th (p is a natural number) region from the upper end is the gas inflow region (B).

The above conditions (i) and (ii) are satisfied with a gas separation device using a pressure swing adsorption method, wherein the interior of the gas separation device is partitioned into 2n+1 (n is a natural number equal to or greater than 2) regions in a height direction, whereby the gas adsorption regions (A), the gas inflow region (B), and the gas outflow region (C) are provided such that 2m-th (m is a natural number) regions from an upper end are the gas adsorption regions (A), a 4p+1-th (p is a natural number) region from the upper end is the gas outflow region (B), and a 4p-1-th (p is a natural number) region from the upper end is the gas inflow region (C).

### Advantageous Effects of Invention

The gas separation device using the pressure swing adsorption method of the present invention has a plurality of gas adsorption regions A juxtaposed at an interval, and by providing a gas inflow region B and a gas outflow region C by a predetermined condition relative to the gas adsorption regions A, it is possible to reduce the number of the gas inflow regions B and/or the gas outflow regions C compared to the number of the gas adsorption regions A, and thus the volume ratio of the gas adsorption regions A can be enhanced. For this reason, according to the gas separation device using the pressure swing adsorption method of the present invention, even if the size of the device is increased, the filling rate of the adsorbent to the capacity can be increased, and the compactness and the efficiency improvement of the device can be promoted. In addition, according to the gas separation device using the pressure swing adsorption method of the present invention, there is also an advantage that the device has a simple structure and the cost can be reduced.

### Brief Description of Drawings

FIG. 1 is a perspective view that illustrates a configuration of a gas separation device of an embodiment of the present invention.
FIG. 2 is a horizontal cross-sectional view of the gas separation device illustrated in FIG. 1.
FIG. 3 is a perspective view that illustrates a configuration of a gas separation device of another embodiment of the present invention.
FIG. 4 is a horizontal cross-sectional view of the gas separation device illustrated in FIG. 3.
FIG. 5 is a perspective view that illustrates a configuration of a gas separation device of still another embodiment of the present invention.
FIG. 6 is a vertical cross-sectional view of the gas separation device illustrated in FIG. 5.
FIG. 7 is a perspective view that illustrates a configuration of a gas separation device of still another embodiment of the present invention.
FIG. 8 is a vertical cross-sectional view of the gas separation device illustrated in FIG. 7.
FIG. 9 is a schematic diagram that illustrates a configuration of a gas separation device of still another embodiment of the present invention.
FIG. 10 is a schematic diagram that illustrates a configuration of a gas separation device of still another embodiment of the present invention.
FIG. 11A is a schematic diagram that illustrates a configuration of a cylindrical-shaped gas separation device of the related art.
FIG. 11B is a schematic diagram that illustrates a configuration of a pillow-type gas separation device of the related art.

### Description of Embodiments

According to the present invention, there is provided a gas separation device using a pressure swing adsorption method which brings a mixed gas serving as a raw material into contact with an adsorbent filled in a gas adsorption region A, and adsorbs and separates one or more gas components in the mixed gas, wherein the device has a plurality of gas adsorption regions A juxtaposed at an interval, and a gas inflow region B and a gas outflow region C are provided relative to the gas adsorption regions A so as to satisfy conditions (i) and (ii) below.
(i) A region between the adjacent gas adsorption regions A constitutes the gas inflow region B or the gas outflow region C, which is adjacent to both of the gas adsorption regions A.
(ii) The gas inflow region B is present at one side in a juxtapose direction of the gas adsorption regions A and the gas outflow region C is present at the other side so as to be adjacent to the respective gas adsorption regions A.

Partition walls, through which gas can be ventilated, partition between the gas adsorption region A and the gas inflow region B adjacent thereto and between the gas adsorption region A and the gas outflow region C adjacent thereto, respectively (normally, partition walls such as wire meshes formed with small ports for gas ventilation on the whole surface thereof are used). The gas inflow region B and the gas outflow region C are space sections that cause gas to enter or exit through the partition wall between the gas adsorption region A and the regions B or C.

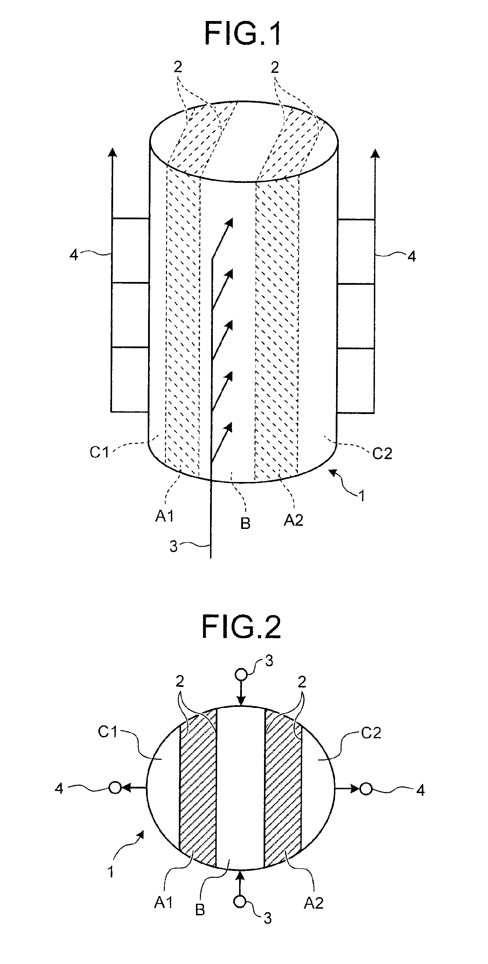

FIGS. 1 and 2 are schematic diagrams that illustrate the configuration of a gas separation device of an embodiment of the present invention, FIG. 1 is a perspective view and FIG. 2 is a horizontal cross-sectional view. In the present embodiment, the interior of a longitudinal cylinder-shaped adsorption tank 1 (a device main body) is partitioned into 2n+1 (n is a natural number equal to or greater than 2) regions by straight lines parallel to a diameter, whereby the gas adsorption regions A1 and A2 are juxtaposed at an interval. 2m-th (m is a natural number) regions from an end are gas adsorption regions A1 and A2, a 4p+1-th (p is a natural number) region from the same end is the gas inflow region B (the gas inflow section), and 4p-1-th (p is a natural number) regions from the same end are the gas outflow regions C1 and C2 (gas outflow sections). Thus, the structure satisfies the conditions of (i) and (ii) mentioned above. Partition walls 2 (dispersion boards) provided along a cylinder axial direction of the adsorption tank 1 so as to partition each region is formed of perforated boards (for example, wire meshes or the like) having small ports allowing gas to pass while maintaining the granular adsorbent in the gas adsorption regions A1 and A2 on the whole surface thereof.

A gas supplying pipe 3 for supplying the mixed gas is connected to the gas inflow region B. A gas discharging pipe 4 for discharging the concentrated gas (gas after a part of the mixed gas is adsorbed and separated) is connected to the gas outflow regions C1 and C2. The supply position of the mixed gas using the gas supplying pipe 3 is arbitrary. The gas can be supplied from any one or both of one location or more of the side surface of the gas inflow region B (a side of the adsorption tank 1) and one location or more of the end section of the gas inflow region B (an upper surface and a lower surface of the adsorption tank 1). A dispersion nozzle capable of uniformly supplying the mixed gas over the entire region may be provided in the gas inflow region B.

In such a gas separation device, the mixed gas is introduced into the gas inflow region B through the gas supplying pipe 3, and the gas introduced into the gas inflow region B flows in the gas adsorption regions A1 and A2 through the partition wall 2 (the dispersion board). Moreover, a specific gas component in the mixed gas is adsorbed depending on the characteristics of the adsorbent, and a non-adsorbed component is concentrated in a gas phase. The concentrated gas flows out of the gas outflow regions C1 and C2 through the partition wall 2 (the dispersion board) and then is discharged through the gas discharging pipe 4. As in the device of the related art, the gas adsorbed to the adsorbent is detached from the adsorbent by reducing the in-tank pressure in a recycling process, and the adsorbent is recycled. The in-tank pressure in the adsorption process and the recycling process may be set so that the pressure in the recycling process is lower than the pressure in the adsorption process. Thus, for example, the pressure in the adsorption process may be atmosphere and the pressure in the recycling process may be a vacuum state. The pressure in the adsorption process may be a pressurization state, and the pressure in the recycling process may be atmosphere. Furthermore, the pressure in the adsorption process may be the pressurization state, and the pressure in the recycling process may be a vacuum state.

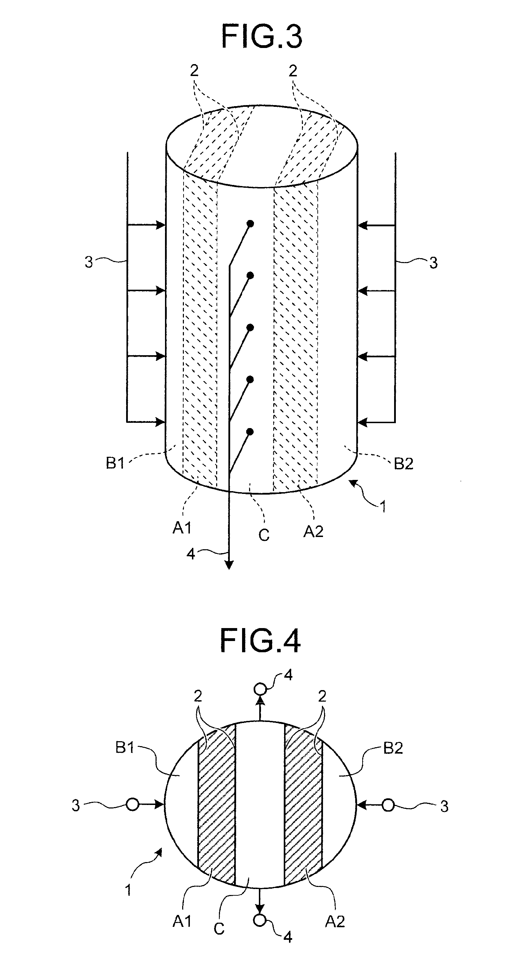

FIGS. 3 and 4 are schematic diagrams that illustrate a configuration of a gas separation device of another embodiment of the present invention, FIG. 3 is a perspective view and FIG. 4 is a horizontal diagram. In the present embodiment, the gas inflow region B and the gas outflow region C are provided in a positional relationship opposite to that of the embodiment of FIGS. 1 and 2. Also in the present embodiment, the interior of a longitudinal cylinder-shaped adsorption tank 1 (a device main body) is partitioned into 2n+1 (n is a natural number equal to or greater than 2) regions by straight lines parallel to a diameter, whereby two gas adsorption regions A1 and A2 are juxtaposed at an interval. 2m-th (m is a natural number) regions from an end is a region between the gas adsorption regions A1 and A2, a 4p+1-th (p is a natural number) region from the same end is the gas outflow region C (the gas outflow section), and 4p-1-th (p is a natural number) regions from the same end are the gas inflow regions B1 and B2 (gas inflow sections). Thus, the structure also satisfies the conditions of (i) and (ii) mentioned above.

A gas supplying pipe 3 for supplying the mixed gas is connected to the gas inflow regions B1 and B2. A gas discharging pipe 4 for discharging the concentrated gas (gas after a part of the mixed gas is adsorbed and separated) is connected to the gas outflow region C. Other configurations (the configurations of the partition wall 2, the gas inflow regions B1 and B2, and the gas supplying pipe 3 or the like), the function of the device, the form of use or the like are similar to those of the embodiment of FIGS. 1 and 2 mentioned above.

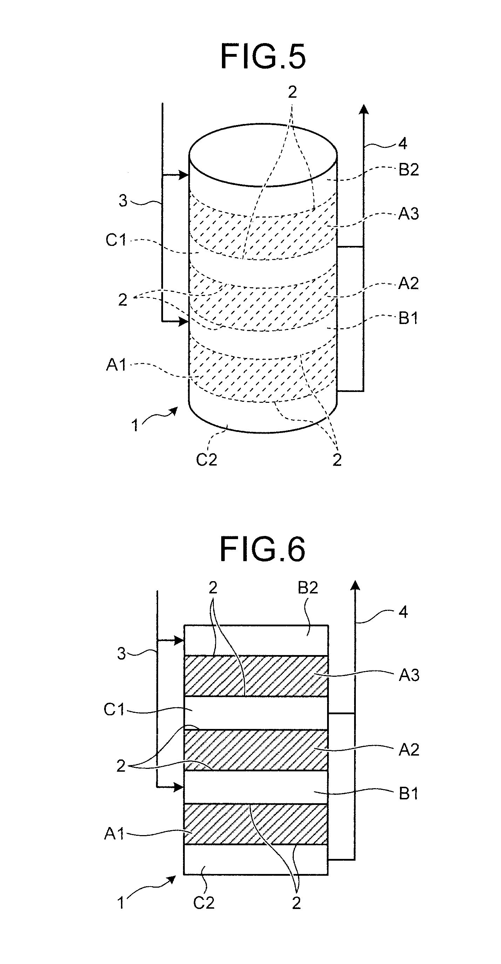

FIGS. 5 and 6 are schematic diagrams that illustrate a configuration of a gas separation device of another embodiment of the present invention, FIG. 5 is a perspective view and FIG. 6 is a vertical cross-sectional view. In the present embodiment, the interior of a longitudinal cylinder-shaped adsorption tank 1 (a device main body) is partitioned into 2n+1 (n is a natural number equal to or greater than 2) regions in the height direction, whereby three gas adsorption regions A1, A2 and A3 are juxtaposed at intervals. 2m-th (m is a natural number) regions from the upper end are the gas adsorption regions A1 and A2, a 4p+1-th (p is a natural number) region from the upper end is the gas inflow region B1 (the gas inflow section), and a 4p-1-th (p is a natural number) region from the upper end is a gas outflow region C1 (a gas outflow section). Furthermore, a region adjacent to and outside of the lower end gas adsorption region A1 forms a gas outflow region C2 (a gas outflow section), and a region adjacent to and outside of the upper end gas adsorption region A3 of forms a gas inflow region B2 (a gas inflow section). Thus, the structure also satisfies the conditions of (i) and (ii) mentioned above.

A gas supplying pipe 3 for supplying the mixed gas is connected to the gas inflow regions B1 and B2. A gas discharging pipe 4 for discharging the concentrated gas (gas after a part of the mixed gas is adsorbed and separated) is connected to the gas outflow regions C1 and C2. Partition walls 2 (dispersion boards) provided along a diameter direction of the adsorption tank 1 for partitioning each region is formed of perforated boards (for example, wire meshes or the like) having small ports allowing gas to pass while maintaining the granular adsorbent in the gas adsorption regions A1 to A3 on the whole surface thereof. Other configurations (the configurations of the gas inflow regions B1 and B2 and the gas supplying pipe 3 or the like), the function of the device, the form of use or the like are similar to those of the embodiment of FIGS. 1 and 2 mentioned above.

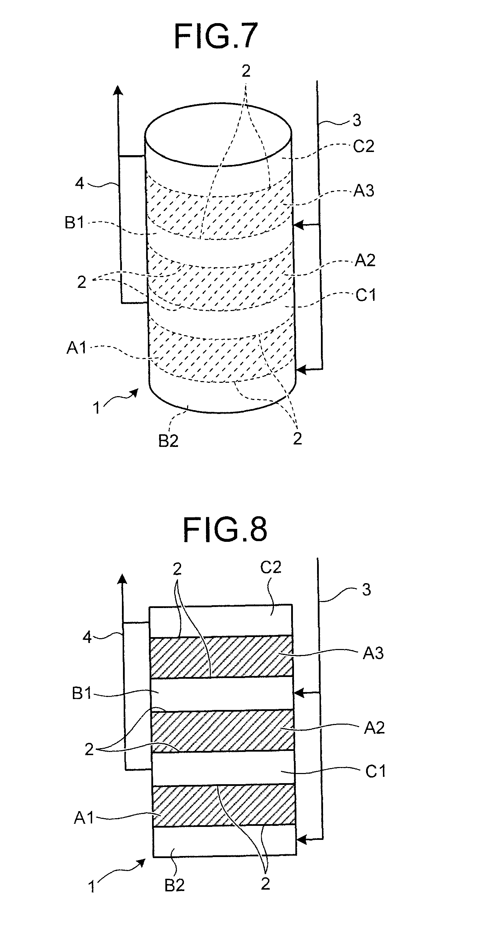

FIGS. 7 and 8 are schematic diagrams that illustrate a configuration of a gas separation device of another embodiment of the present invention, FIG. 7 is a perspective view and FIG. 8 is a vertical cross-sectional view. In the present embodiment, the gas inflow region B and the gas outflow region C are provided in a positional relationship opposite to that of the embodiment of FIGS. 5 and 6. Also in the present embodiment, the interior of a longitudinal cylinder-shaped adsorption tank 1 (a device main body) is partitioned into 2n+1 (n is a natural number equal to or greater than 2) regions in the height direction, whereby three gas adsorption regions A1, A2 and A3 are juxtaposed at intervals. 2m-th (m is a natural number) regions from the upper end is a region between the gas adsorption regions A1 and A2, a 4p+1-th (p is a natural number) region from the upper end is the gas outflow region C1 (the gas outflow section), and a 4p-1-th (p is a natural number) region from the upper end is a gas inflow region B1 (a gas inflow section). Furthermore, a region adjacent to and outside of the lower end gas adsorption region A1 forms a gas inflow region B2 (a gas inflow section), and a region adjacent to and outside of the upper end gas adsorption region A3 forms a gas outflow region C2 (a gas outflow section). Thus, the structure also satisfies the conditions of (i) and (ii) mentioned above.

A gas supplying pipe 3 for supplying the mixed gas is connected to the gas inflow regions B1 and B2. A gas discharging pipe 4 for discharging the concentrated gas (gas after a part of the mixed gas is adsorbed and separated) is connected to the gas outflow regions C1 and C2. Other configurations (the configurations of the partition wall 2, the gas inflow regions B1 and B2 and the gas supplying pipe 3 or the like), the function of the device, the form of use or the like are similar to those of the embodiment of FIGS. 1 and 2 and the embodiment of FIGS. 5 and 6 mentioned above.

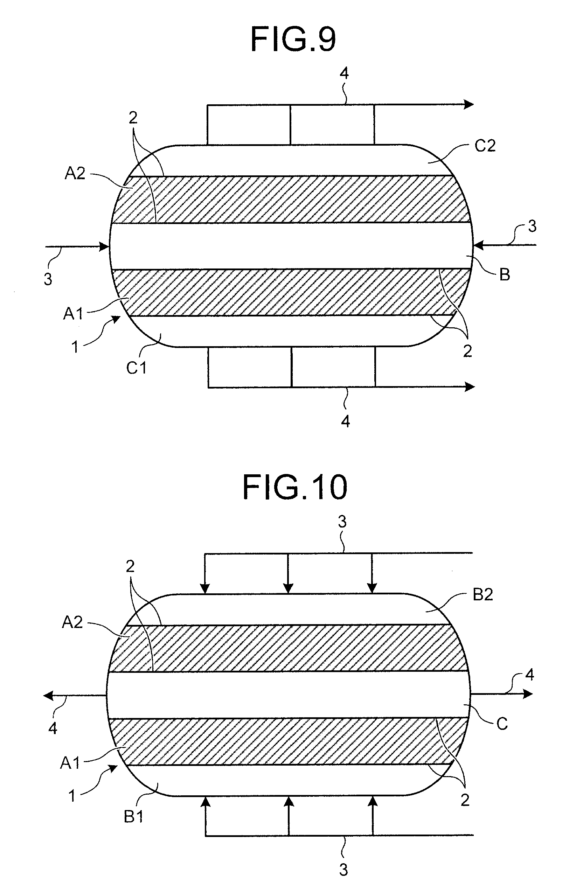

FIG. 9 is a schematic diagram (a vertical cross-sectional view) that illustrates a configuration of a gas separation device of another embodiment of the present invention, and illustrates a case of being applied to a pillow type (a flat type) device. In the present embodiment, the interior of a pillow type (the flat type) adsorption tank 1 (a device main body) is partitioned into 2n+1 (n is a natural number equal to or greater than 2) regions in the height direction, whereby two gas adsorption regions A1 and A2 are juxtaposed at an interval. 2m-th (m is a natural number) regions from the upper end are the gas adsorption regions A1 and A2, a 4p-1-th (p is a natural number) region from the upper end is the gas inflow region B (the gas inflow section), and 4p+1-th (p is a natural number) regions from the upper end constitute gas outflow regions C1 and C2 (gas outflow sections). Thus, the structure also satisfies the conditions of (i) and (ii) mentioned above.

A gas supplying pipe 3 for supplying the mixed gas is connected to the gas inflow region B. A gas discharging pipe 4 for discharging the concentrated gas (gas after a part of the mixed gas is adsorbed and separated) is connected to the gas outflow regions C1 and C2. Partition walls 2 (dispersion boards) provided along a diameter direction of the adsorption tank 1 for partitioning each region are formed of perforated boards (for example, wire meshes or the like) having small ports allowing gas to pass while maintaining the granular adsorbent in the gas adsorption regions A1 and A2 on the whole surface thereof. Other configurations (the configurations of the gas inflow region B and the gas supplying pipe 3 or the like), the function of the device, the form of use or the like are similar to those of the embodiment of FIGS. 1 and 2 mentioned above.

FIG. 10 is a schematic diagram (a vertical cross-sectional view) that illustrates a configuration of a gas separation device of another embodiment of the present invention. In the present embodiment, the gas inflow region B and the gas outflow region C are provided in a positional relationship opposite to that of the embodiment of FIG. 9. Also in the present embodiment, the interior of a pillow type (the flat type) adsorption tank 1 (a device main body) is partitioned into 2n+1 (n is a natural number equal to or greater than 2) regions in the height direction, whereby two gas adsorption regions A1 and A2 are juxtaposed at an interval. 2m-th (m is a natural number) regions from the upper end are the gas adsorption regions A1 and A2, a 4p-1-th (p is a natural number) region from the upper end is the gas outflow region C (the gas outflow section), and 4p+1-th (p is a natural number) regions from the upper end are the gas inflow regions B1 and B2 (gas inflow sections). Thus, the structure also satisfies the conditions of (i) and (ii) mentioned above.

A gas supplying pipe 3 for supplying the mixed gas is connected to the gas inflow regions B1 and B2. A gas discharging pipe 4 for discharging the concentrated gas (gas after a part of the mixed gas is adsorbed and separated) is connected to the gas outflow region C. Other configurations (the configurations of the partition wall 2, the gas inflow regions B1 and B2, and the gas supplying pipe 3 or the like), the function of the device, the form of use or the like are similar to those of the embodiment of FIGS. 1 and 2 and the embodiment of FIG. 9 mentioned above.

As will be understood from the embodiments mentioned above, the gas separation device of the present invention has a plurality of gas adsorption regions A juxtaposed at an interval, and by providing the gas inflow region B and the gas outflow region C so as to satisfy the conditions (i) and (ii) mentioned above, the number of the gas inflow region B and/or the gas outflow region C can be reduced compared to the number of the gas adsorption region A. As a result, the volume ratio of the gas adsorption region A to the capacity of the adsorption tank 1 can be increased while maintaining or reducing the pressure loss. As far as the device of the present invention satisfies the conditions of (i) and (ii) mentioned above, the number of the plurality of gas adsorption region A is arbitrary, and the device may have four or more gas adsorption regions A. Furthermore, the size and the shape of the adsorption tank 1 are also arbitrary.

The kind of adsorbent filled to the gas adsorption region A does not matter to the device of the present invention. An arbitrary adsorbent such as a zeolite type, activated charcoal type, and alumina type can be used depending on the kind of gas to be adsorbed. Furthermore, the kind of mixed gas and the kind of gas component to be adsorbed and separated, to which the device of the present invention is applied, are also arbitrary. Furthermore, the device of the present invention can also be applied to the pressure and temperature swing adsorption method of the type which performs the adsorption while cooling, and performs the heating during recycling. In this case, it is possible to adopt a configuration or the like in which a heat exchange tube for heating and cooling is inserted into the gas adsorption region A.

As mentioned above, although the embodiments have been described to which the present invention was applied by the inventors, the present invention is not limited by the description and the drawings forming a part of the disclosure of the present invention. For example, in this manner, other embodiments, examples, operation technologies or the like made by those skilled in the art based on the present embodiment are included in the scope of the present invention.

### Industrial Applicability

The present invention can be applied to gas separation devices which adsorb and separate a specific gas component from a mixed gas using a pressure swing adsorption method.

### Reference Signs List

- 1: ADSORPTION TANK
- 2: PARTITION WALL
- 3: GAS SUPPLYING PIPE
- 4: GAS DISCHARGING PIPE
- A1, A2, A3: GAS ADSORPTION REGION
- B, B1, B2: GAS INFLOW REGION
- C, C1, C2: GAS OUTFLOW REGION

## Claims

1. A gas separation device using a pressure swing adsorption method which brings a mixed gas serving as a raw material into contact with an adsorbent filled in a gas adsorption region (A), and adsorbs and separates one or more gas components in the mixed gas,
wherein the device has a plurality of the gas adsorption regions (A) juxtaposed at an interval, and a gas inflow region (B) and a gas outflow region (C) are provided relative to the gas adsorption regions (A) so as to satisfy conditions (i) and (ii) below,
(i) a region between the adjacent gas adsorption regions (A) constitutes the gas inflow region (B) or the gas outflow region (C), which is adjacent to both of the gas adsorption regions (A), and
(ii) the gas inflow region (B) is present at one side in a juxtapose direction of the gas adsorption regions (A) and the gas outflow region (C) is present at the other side so as to be adjacent to the respective gas adsorption regions (A).

2. The gas separation device using the pressure swing adsorption method according to Claim 1,
wherein the interior of the gas separation device is partitioned into 2n+1 (n is a natural number equal to or greater than 2) regions by straight lines parallel to a diameter, whereby the gas adsorption regions (A), the gas inflow region (B) and the gas outflow region (C) are provided such that
2m-th (m is a natural number) regions from an end are the gas adsorption regions (A),
a 4p+1-th (p is a natural number) region from the same end is the gas inflow region (B), and
a 4p-1-th (p is a natural number) region from the same end is the gas outflow region (C).

3. The gas separation device using the pressure swing adsorption method according to Claim 1,
wherein the interior of the gas separation device is partitioned into 2n+1 (n is a natural number equal to or greater than 2) regions by straight lines parallel to a diameter, whereby the gas adsorption regions (A), the gas inflow region (B) and the gas outflow region (C) are provided such that
2m-th (m is a natural number) regions from an end are the gas adsorption regions (A),
a 4p+1-th (p is a natural number) region from the same end is the gas outflow region (C), and
a 4p-1-th (p is a natural number) region from the same end is the gas inflow region (B).

4. The gas separation device using the pressure swing adsorption method according to Claim 1,
wherein the interior of the gas separation device is partitioned into 2n+1 (n is a natural number equal to or greater than 2) regions in a height direction, whereby the gas adsorption regions (A), the gas adsorption region (B), and the gas inflow region (C) are provided such that
2m-th (m is a natural number) regions from an upper end are the gas adsorption regions (A),
a 4p+1-th (p is a natural number) region from the upper end is the gas outflow region (C), and
a 4p-1-th (p is a natural number) region from the upper end is the gas inflow region (B).

5. The gas separation device using the pressure swing adsorption method according to Claim 1,
wherein the interior of the gas separation device is partitioned into 2n+1 (n is a natural number equal to or greater than 2) regions in a height direction, whereby the gas adsorption regions (A), the gas inflow region (B), and the gas outflow region (C) are provided such that
2m-th (m is a natural number) regions from an upper end are the gas adsorption regions (A),
a 4p+1-th (p is a natural number) region from the upper end is the gas outflow region (B), and
a 4p-1-th (p is a natural number) region from the upper end is the gas inflow region (C).
